# EUROPEAN PATENT SPECIFICATION

(11) **EP 3 831 747 B1**
(45) Date of publication and mention of the grant of the patent: **28.10.2026**
(21) Application number: 19213304.9
(22) Date of filing: 03.12.2019
(51) Int. Cl.: B65G 59/00

(54) **GRIPPER FOR A DEPALLETIZATION MACHINE**
GREIFER FÜR EINE ENTPALETTIERMASCHINE
PRÉHENSEUR POUR MACHINE DE DÉPALLETISATION

(43) Date of publication of application: 09.06.2021
(73) Proprietor: Sidel S.p.A., 43126 Parma (IT)
(72) Inventor: LANZI, Mauro, 43126 PARMA (IT)
(74) Representative: Sidel Group

(56) References cited:
- JP-A- H08 225 154
- JP-A- S57 189 930
- JP-A- S58 211 884
- JP-U- S6 030 123

## Description

The present invention relates to a gripper for a depalletization machine.

In general, depalletization machines are known with the purpose of disassembling unit loads, which comprise a pallet and a plurality of layers stacked on it.

In detail, the unit load comprises:
- an uppermost layer with reference to a vertical direction;
- a lowermost layer with reference to the vertical direction, which is the closest layer to the pallet; and
- a plurality of layers interposed between the uppermost layer and the lowermost layer.

Furthermore, the unit loads comprise a plurality of pallet interlayers, which are sheets generally made of cardboard and may be placed:
- between the pallet and the lowermost layer, so as to prevent contaminations and damage related to the use of the pallet (damping, perforations, pallet marks and layer collapsing) ;
- between two consecutive layers according to the vertical direction, so as to separate the layers and to prevent friction between them; and/or
- on the top of the unit load according to the vertical direction and on the uppermost layer, so as to protect it against dust and other contamination related to the transport.

Each layer of the unit load comprises a plurality of containers or boxes of containers, for example, bottles containing food products arranged next to one another.

The known depalletization machines comprise a thrust element, which is controllable to repeatedly thrust the containers forming one layer, so as to remove the layers from the unit load one after the other, starting from the uppermost layer of the unit load.

In detail, when the thrust element is operated, the current uppermost layer is horizontally moved, while the underlying layers and the pallet remain substantially stationary.

After the uppermost layer is removed from the unit load, the layer placed beneath the uppermost layer with respect to the vertical direction becomes the new uppermost layer of the unit load.

Eventually, after the penultimate layer with respect to the vertical direction is removed from the unit load, the lowermost layer becomes at the same time the new uppermost layer of the unit load.

However, when the thrust element of the known depalletization machines is operated, the pallet interlayer placed beneath the current uppermost layer must be held tight, in order to avoid possible interference with the functioning of the thrust element.

In detail, during the functioning of the thrust element the pallet interlayer placed beneath the current uppermost layer could undesirably move with respect to the pallet.

The known depalletization machines comprise two kinds of grippers for this purpose.

Known from JP H08225154A is a gripper for depalletization machines as defined in the preamble of claim 1.

In detail, a first kind of grippers is configured to grip one pallet interlayer placed between two consecutive layers of the unit load, by gripping both of its sides along the vertical direction.

A second kind of grippers is configured to grip the pallet interlayer placed between the pallet and the lowermost layer, by gripping only one of its sides along the vertical direction.

Grippers of first and second kinds cannot be used interchangeably.

On the one hand, if a gripper of the first kind were used to grip the pallet interlayer placed between the pallet and the lowermost layer, there would be interference between the gripper and the pallet.

On the other hand, if a gripper of the second kind were used to grip one pallet interlayer placed between two consecutive layers of the unit load, there would not be an effective gripping, because the gripper of the second kind is not configured to grip both sides of the interlayer along the vertical direction.

In particular, the known depalletization machines comprise three grippers of the first kind and two grippers of the second kind.

The two grippers of the second kind are generally interposed between the three grippers of the first kind, forming an ordered array in a direction transversal to the vertical direction.

As a consequence, since grippers of both the first and the second kinds need to be used to grip the pallet interlayers, the known depalletization machines are affected by various drawbacks.

In fact, each kind of grippers requires different mounting and maintenance operations and replacement parts.

This is very disadvantageous, because it causes major economic losses.

A need is therefore felt within the industry for improved grippers, which allow to solve the drawbacks of the known depalletization machines.

It is an object of the present invention to provide a gripper for a depalletization machine, allowing to meet the aforementioned need in a simple and cost-effective manner.

This object is achieved by a gripper, as claimed in claim 1.

One preferred, non-limiting embodiment of the present invention will be described by way of example with reference to the accompanying drawings, in which:
- Figures 1A, 1B and 1C are lateral views of a depalletization machine comprising a gripper according to the present invention in respective sequential operative steps;
- Figure 2 is a top view of the depalletization machine of Figures 1A, 1B and 1C;
- Figures 3, 4 and 5 are lateral views of the gripper according to the present invention in respective operating positions;
- Figure 6 is a perspective view of the gripper of Figures 3, 4 and 5; and
- Figure 7 is a scheme of some components of the depalletization machine of Figures 1A, 1B and 1C.

In the following of the present description and in the claims the expression "in use" means "during operation".

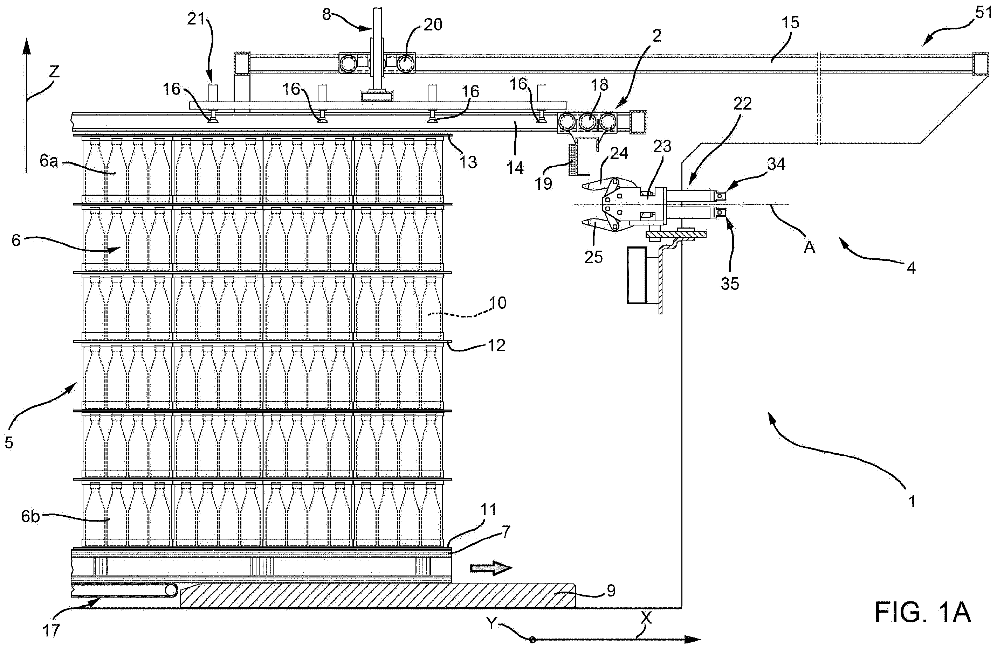

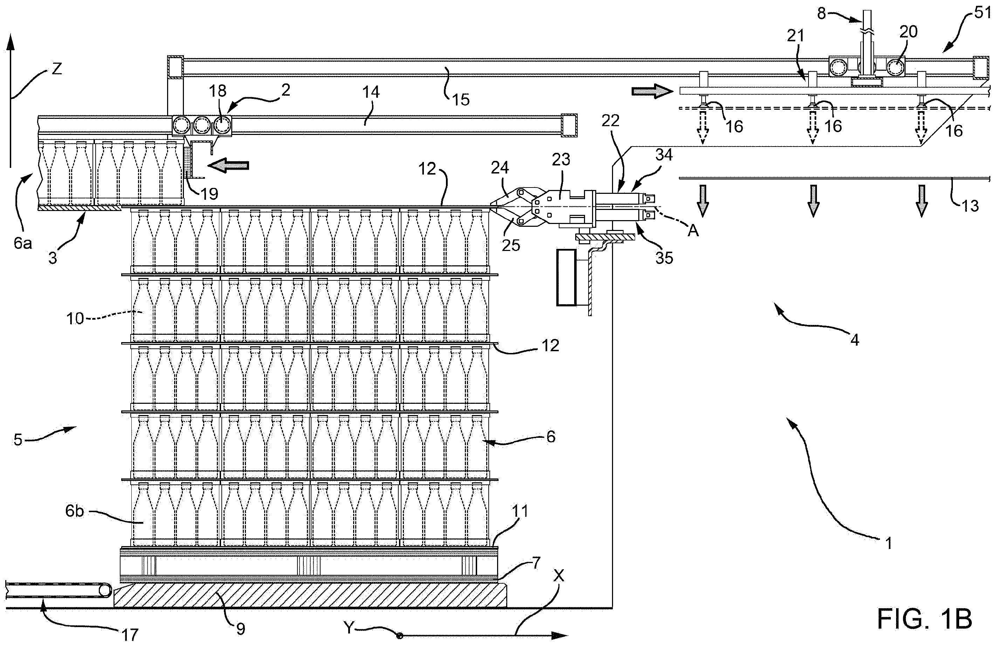

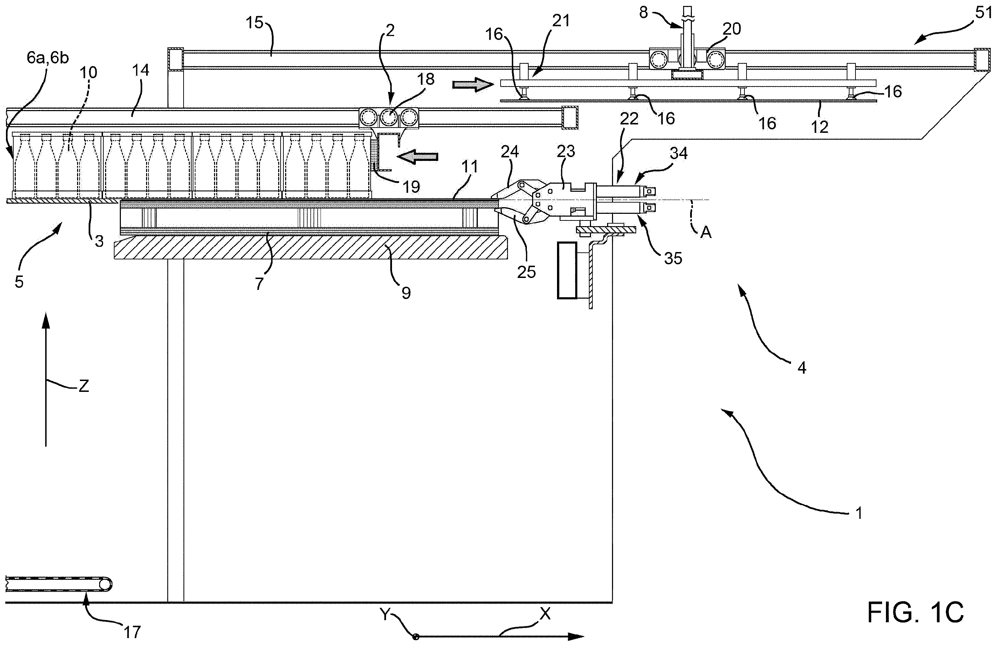

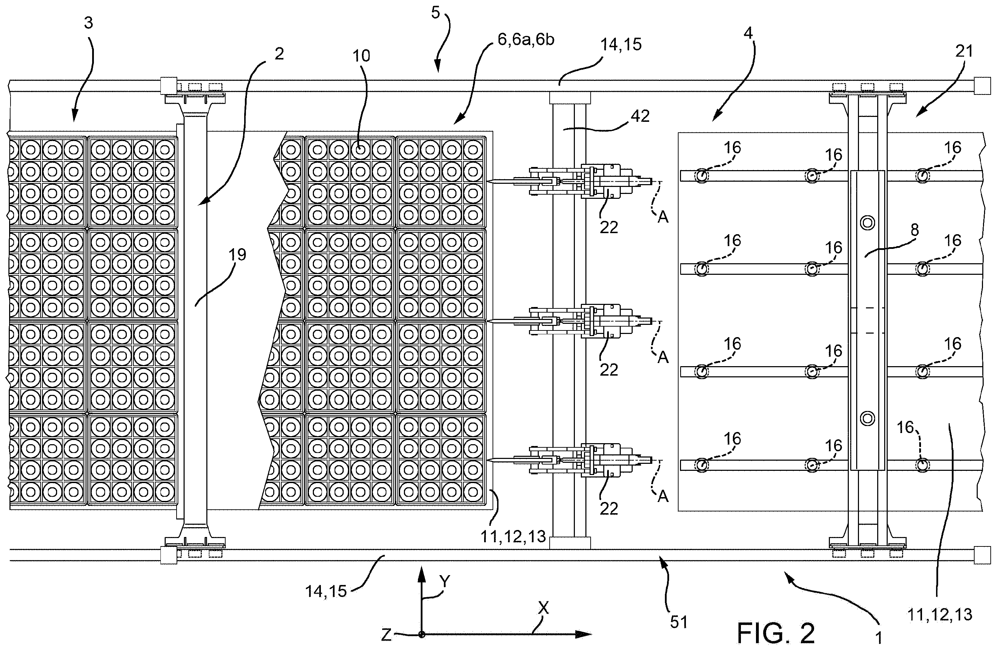

With reference to Figures 1A, 1B, 1C and 2, numeral 1 indicates a depalletization machine for disassembling unit load 5, which comprises a pallet 7 and a plurality of layers 6, 6a, 6b stacked on it along a vertical direction Z.

It is also possible to define two directions X, Y, which are transversal to each other and to direction Z.

Each layer 6, 6a, 6b of unit load 5 comprises a plurality of containers or boxes of containers 10, for example, bottles or cans.

In detail, bottles or cans may be empty or filled with food products.

As shown in Figure 2, containers 10 forming one layer 6, 6a, 6b are arranged next to one another along directions X and/or Y.

Unit load 5 comprises, with reference to direction Z:
- an uppermost layer 6a;
- a lowermost layer 6b, which is the closest layer to pallet 7; and
- a plurality of layers 6 interposed between uppermost layer 6a and lowermost layer 6b.

In a unit load 5 comprising only one layer 6, 6a, 6b, uppermost layer 6a and lowermost layer 6b coincide.

Preferably, pallet 7 protrudes from layers 6, 6a, 6b along directions X and/or Y (Figures 1A, 1B and 1C).

Furthermore, unit load 5 comprises (Figures 1A, 1B and 1C) :
- a base interlayer 11, placed between pallet 7 and lowermost layer 6b of unit load 5 along direction Z;
- a plurality of intermediate interlayers 12, placed between two layers 6, 6a, 6b of unit load 5 consecutively stacked on each other along direction Z; and
- a top interlayer 13, placed on uppermost layer 6a.

Preferably, interlayers 11, 12, 13 protrude from layers 6, 6a, 6b along directions X and/or Y (Figures 1A, 1B and 1C).

Interlayers 11, 12, 13 are generally made of cardboard or a polymer material.

In the embodiment shown, interlayers 11, 12, 13 are equal to each other.

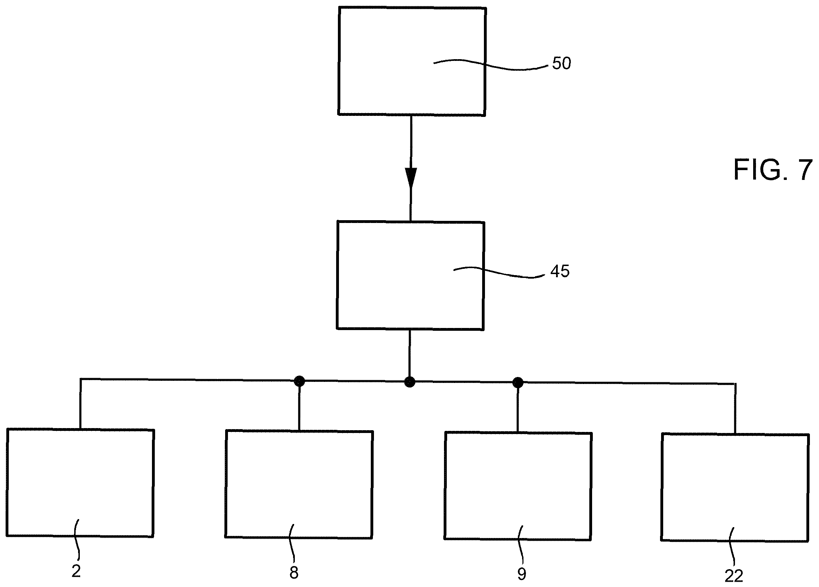

Depalletization machine 1 comprises (Figures 1A, 1B and C):
- a fixed base 51 (not completely shown);
- a thrust element 2, which is controllable to repeatedly thrust containers 10 forming one layer 6, 6a, 6b, so as to remove layers 6, 6a, 6b from unit load 5 one after the other;
- an interlayer removal element 8, which is controllable to remove interlayers 11, 12, 13 from unit load 5; and
- a control unit 45, only schematically shown in Figure 7, for controlling thrust element 2 and interlayer removal element 8.

Depalletization machine 1 further comprises (Figures 1B and 1C):
- a support platform 9, which is controllable by control unit 45 to translate parallel to direction Z and on which unit load 5 is positioned to be disassembled;
- a container discharge station 3, at which containers 10 of layers 6, 6a, 6b are discharged; and
- an interlayer discharge station 4, at which interlayers 11, 12, 13 are discharged.

Support platform 9 and unit load 5 placed on support platform 9 are movable along direction Z by means of chain or belt drives.

Furthermore, container discharge station 3 and interlayer discharge station 4 are arranged on opposite sides of support platform 9 along direction X.

In the embodiment shown, container discharge station 3 comprises a conveyor (not shown), for conveying containers 10 removed from unit load 5.

Interlayer discharge station 4 comprises a discharge container (not shown), in which interlayers 11, 12, 13 removed from unit load 5 are collected.

In the embodiment shown, thrust element 2 reciprocates parallel to direction X, so as to horizontally move containers 10 of the current uppermost layer 6a of unit load 5 towards container discharge station 3 (Figures 1B and 1C).

After uppermost layer 6a is removed from unit load 5, the layer 6 placed beneath uppermost layer 6a with respect to direction Z becomes the new uppermost layer 6a of unit load 5.

Eventually, after the penultimate layer 6 with respect to direction Z (i.e. the closest layer 6 to lowermost layer 6b) is removed from unit load 5, lowermost layer 6b becomes at the same time the new uppermost layer 6a of unit load 5.

Thrust element 2 translates on guides 14, which are directed parallel to direction X and fixed to fixed base 51 (Figures 1A, 1B, 1C and 2).

Thrust element 2 comprises, in turn (Figures 1A, 1B, 1C and 2):
- an engine 18, preferably of electrical type; and
- a beam 19, which is operated by engine 18, is configured to push containers 10 towards container discharge station 3 and is directed parallel to direction Y and transversally to guides 14 (Figure 2).

Preferably, thrust element 2 removes only one layer 6, 6a, 6b at a time from unit load 5.

Interlayer removal element 8 reciprocates along direction X as well, so as to grab interlayers 11, 12, 13 and to move them towards interlayer discharge station 4.

In detail, interlayer removal element 8 translates on guides 15, which are directed parallel to direction X and fixed to fixed base 51 (Figures 1A, 1B, 1C and 2).

In the embodiment shown, guides 15 are placed above guides 14 with respect to direction Z.

Interlayer removal element 8 comprises:
- an engine 20, preferably of electrical type; and
- grabbing means 21, which are driven by engine 20, for grabbing and holding interlayers 11, 12, 13 during the translation of interlayer removal element 8.

Interlayer removal element 8 may be an automatic handling system of any kind; in the embodiment shown, grabbing means 21 comprise suction cups 16.

Depalletization machine 1 further comprises a conveyor 17, which is configured to convey unit load 5 towards support platform 9 (Figure 1A).

Furthermore, depalletization machine 1 comprises a plurality of grippers 22, three in the embodiment shown (Figures 1A, 1B and 1C), controlled by control unit 45 (Figure 7).

Only one gripper 22 is disclosed, being grippers 22 identical to one another.

Each gripper 22 comprises, in turn:
- a frame 23, which is fixed to fixed base 51; and
- two arms 24, 25, which are movable with respect to frame 23.

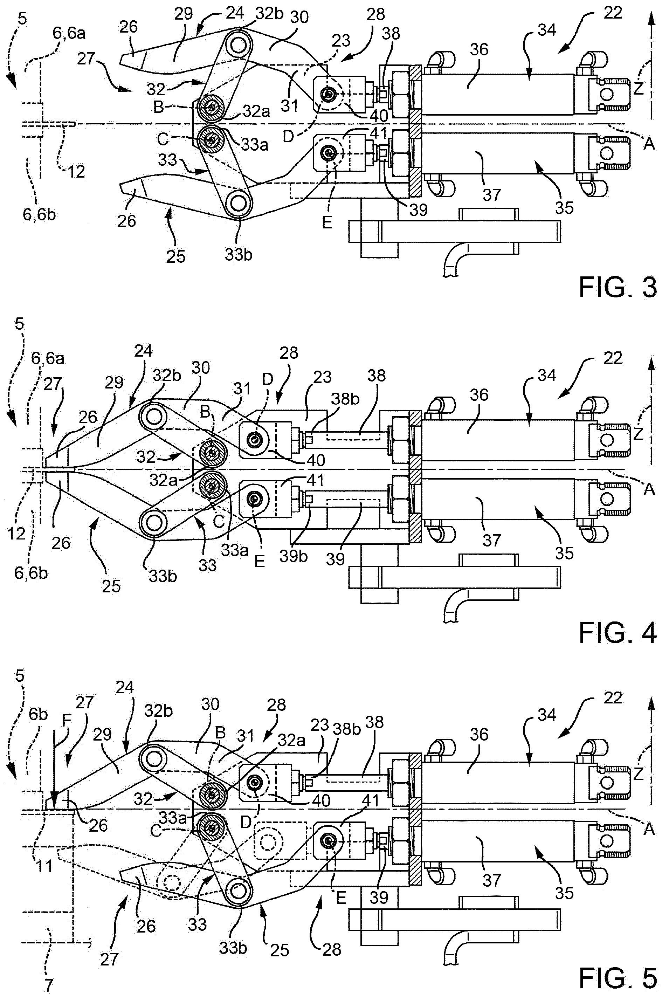

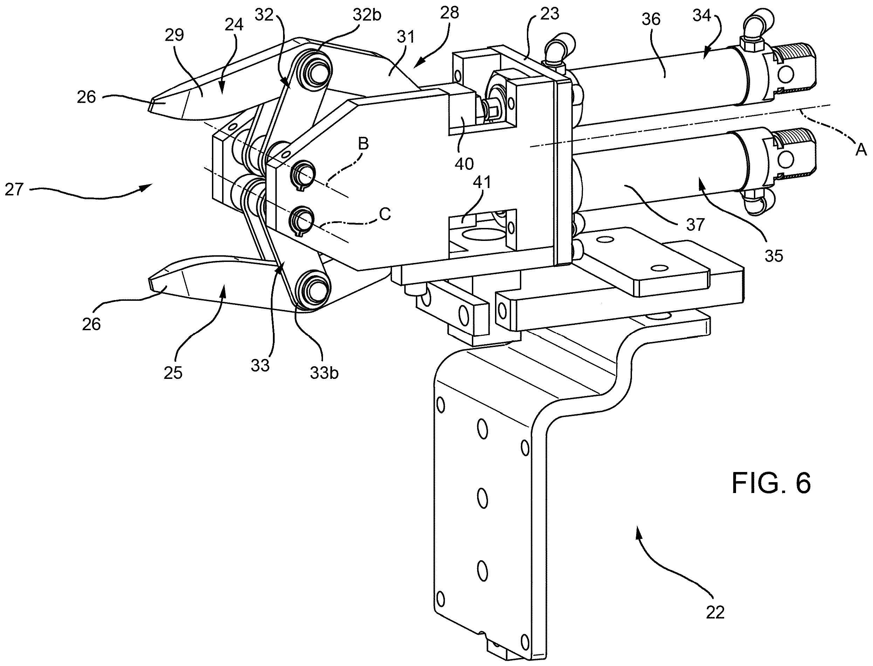

As shown in Figures 3 to 6, arm 24 is arranged above arm 25 with respect to direction Z.

In detail, arms 24, 25 are symmetrical with respect to an axis A of gripper 22, which is preferably directed parallel to direction X.

In the embodiment shown, gripper 22 is at a fixed position along direction Z with respect to guides 14 and unit load 5 is translated parallel to direction Z by means of support platform 9 (Figures 1A, 1B and 1C).

Furthermore, arms 24, 25 are movable between respective retracted and forward positions with respect to frame 23 along axis A.

In the embodiment shown, the retracted positions of arms 24, 25 correspond to respective minimum distances between homologous points of arms 24, 25 and frame 23; the forward positions of arms 24, 25 correspond to respective maximum distances between homologous points of arms 24, 25 and frame 23.

Advantageously, arms 24, 25 are movable independently of each other and gripper 22 is settable at least in:
- a first configuration, in which arms 24, 25 are both in respective forward positions and grip both sides of an intermediate interlayer 12 along direction Z (Figure 4); and
- a second configuration, in which only arm 24 is in the respective forward position and contacts only one side of a base interlayer 11 (Figure 5).

Gripper 22 is further settable in a third configuration, in which arms 24, 25 are both in respective retracted positions (Figure 3).

Gripper 22 is set in the third configuration when interlayers 11, 12, 13 need not to be held tight, for example during the translation of support platform 9 parallel to direction Z, so as to avoid interference between gripper 22 and unit load 5.

Gripper 22 further comprises actuators 34, 35, which are related to arms 24, 25 respectively, and are selectively settable in respective contracted positions (Figure 3) or in respective extended positions with reference to axis A (Figure 4).

Actuators 34, 35 are linear and arranged parallel to axis A.

In the following of the present description and in the claims the length of actuators 34, 35 parallel to axis A must be intended as the length of actuators 34, 35 outside frame 23.

In detail, actuators 34, 35 are in the respective contracted positions, when they have respective minimum lengths parallel to axis A and in the respective extended positions, when they have respective maximum lengths parallel to axis A.

In further detail, arm 24 is in the retracted or forward positions when actuator 34 is in the contracted or extended positions respectively (Figures 3; 4, 5) and arm 25 is in the retracted or forward positions when actuator 35 is in the contracted or extended positions respectively (Figures 3, 5; 4).

Arms 24, 25 are articulated on frame 23 and on respective actuators 34, 35.

In detail, arm 24 is rotatable and translatable with respect to frame 23 independently of arm 25 and vice versa.

Furthermore, each arm 24, 25 comprises a gripping stretch 26, at a front free portion 27 of arms 24, 25, which is configured to hold tight one interlayer 11, 12, 13 (Figures 3 to 6) in the respective forward positions.

Each arm 24, 25 further comprises a rear portion 28, which is connected to respective actuator 34, 35 and is opposite to front free portion 27 along axis A.

In detail, the retracted (forward) position of arms 24, 25 corresponds to the respective minimum (maximum) distances between homologous gripping stretches 26 and frame 23.

In addition, when gripper 22 is set in the first configuration, gripping stretches 26 of both arms 24, 25 are in contact with interlayer 12 and prevent it from moving (Figure 4).

Furthermore, when gripper 22 is set in the second configuration, gripping stretch 26 of arm 24 only is in contact with base interlayer 11 and exerts a force F on pallet 7 (Figure 5).

In detail, force F is directed parallel to direction Z and prevents base interlayer 11 from moving with respect to pallet 7.

When grippers 22 are set in the first or in the second configuration, axis A is preferably aligned with the midplane of the gripped interlayer 11 or 12 perpendicular to direction Z (Figures 4 and 5).

In the embodiment shown, when arms 24, 25 are in respective forward positions, respective gripping stretches 26 are directed substantially parallel to axis A (Figure 4).

Proceeding from front free portion 27 to rear portion 28, each arm 24, 25 further comprises (Figures 3, 4 and 5):
- a stretch 29, which moves away from axis A parallel to direction Z;
- a stretch 30, which is substantially parallel to axis A when arms 24, 25 are in respective forward positions (Figure 4); and
- a stretch 31, which moves close to axis A parallel to direction Z.

In detail, stretches 29, 30 and 31 are formed in one piece.

Gripper 22 further comprises two cranks 32, 33 having respective first ends 32a, 33a and second ends 32b, 33b, which are opposite to respective first ends 32a, 33a (Figures 3 to 5).

In the embodiment shown, cranks 32, 33 are rectilinear and respective first, second ends 32a, 32b, 33a, 33b are rounded (Figures 3 to 6).

In detail, first ends 32a, 33a of respective cranks 32, 33 are hinged to frame 23 about respective axes B, C, which are directed transversally to axis A.

Furthermore, second ends 32b, 33b of cranks 32, 33 are hinged respectively to arms 24, 25.

As shown in Figures 3 to 6, second ends 32b, 33b are hinged to respective arms 24, 25 at the border between stretch 29 and stretch 30 of respective arms 24, 25.

As a consequence, arms 24, 25 are rotatable with respect to frame 23 about respective axes B, C.

In detail, arm 24 is rotatable about axis B independently of the rotation of arm 25 about axis C and vice versa.

In addition, cranks 32, 33 have a shorter length than arms 24, 25 along axis A.

Depalletization machine 1 further comprises detecting means 50, only schematically shown in Figure 7, which are configured to detect an information on whether the interlayer placed beneath the current uppermost layer 6a is a base interlayer 11 or an intermediate interlayer 12.

Detecting means 50 are further configured to send the information to control unit 45 (Figure 7).

In the embodiment shown, detecting means 50 comprise a position transducer, e.g. an encoder.

Actuators 34, 35 comprise:
- respective cylinders 36, 37, which are stationary with respect to frame 23; and
- respective rods 38, 39, which are telescopically slidable with respect to respective cylinders 36, 37.

Rods 38, 39 have two respective opposite ends 38a, 38b; 39a, 39b.

In detail, ends 38a, 39a (not shown) are positioned inside respective cylinders 36, 37 and ends 38b, 39b are positioned outside respective cylinders 36, 37 (Figures 4 and 5) .

Furthermore, rods 38, 39 comprise respective driving knobs 40, 41 at respective ends 38b, 39b (Figures 3, 4 and 5), which move integrally with respective rods 38, 39.

As shown in Figures 3 to 6, cylinders 36, 37 and rods 38, 39 are directed parallel to axis A.

In detail, rods 38, 39 and respective cylinders 36, 37 form two linear pneumatic actuators.

In the embodiment shown, cylinders 36, 37 are double-acting cylinders and comprise two respective openings, for the passage of air.

Furthermore, arm 24 is hinged to rod 38 at end 38b and arm 25 is hinged to rod 39 at end 39b.

In detail, arm 24 is hinged at its rear portion 28 on knob 40 about an axis D and arm 25 is hinged at its rear portion 28 on knob 41 about an axis E (Figures 3 to 5).

As a consequence, arms 24, 25 are rotatable with respect to respective rods 38, 39 and are translatable with respect to frame 23 integrally with respective rods 38, 39.

Axes D and E are directed parallel to axes B and C.

Arms 24, 25 are in respective forward positions when knobs 40, 41 are in respective furthest positions from respective cylinders 36, 37 and in respective retracted positions when knobs 40, 41 are in respective closest positions to respective cylinders 36, 37.

Furthermore, grippers 22 are aligned parallel to direction Y and are located at the same height along direction Z with respect to guide 14 (Figure 2).

In addition, grippers 22 are mounted on a beam 42 of fixed base 51 (Figure 2), which is directed parallel to direction Y and beam 19.

Furthermore, grippers 22 are positioned on the side of unit load 5 close to interlayer discharging station 4.

Preferably, the three grippers 22 are controlled by control unit 45, so as to be set simultaneously in the same configuration.

In the embodiment shown (Figure 2), one first gripper 22 is positioned along direction Y at the midpoint of unit load 5 and the other two grippers 22 are positioned symmetrically with respect to said one first gripper 22 and spaced from it along direction Y.

Whenever interlayers 11, 12, 13 need not to be held tight, grippers 22 may also be translated parallel to axis A and away from unit load 5, so as to avoid interference between grippers 22 and unit load 5.

The operation of grippers 22 and depalletization machine 1 is described with reference to a condition, in which grippers 22 are set in the third configuration, i.e. arms 24, 25 are both in respective retracted positions (Figures 1A and 3).

The operation is further described with reference to a condition in which unit load 5 comprises a top interlayer 13.

Control unit 45 commands interlayer removal element 8 to remove top interlayer 13 (Figure 7).

In detail, interlayer removal element 8 translates along direction X on guides 15 (Figure 1A), grabs and holds top interlayer 13 with grabbing means 21 and discharges top interlayer 13 at interlayer discharge station 4 (Figure 1B).

In general, grippers 22 are not used to grip top interlayer 13.

Before or after the removal of top interlayer 13, support platform 9 and unit load 5 placed on support platform 9 is commanded by control unit 45 to translate along direction Z (Figure 7).

As support platform 9 and unit load 5 translate along direction Z, detecting means 50 detect the information on whether the interlayer placed beneath uppermost layer 6a to be thrusted is a base interlayer 11 or an intermediate interlayer 12 and sends the information to control unit 45.

After the translation of support platform 9 and unit load 5 along direction Z, thrust element 2 is commanded by control unit 45 to thrust the current uppermost layer 6a of unit load 5 towards container discharge station 3.

In detail, with the aim of thrusting layer 6, 6a, 6b, thrust element 2 translates along direction X towards container discharge station 3 (from right to left in Figures 1A, 1B, 1C and 2).

Preferably, while thrust element 2 translates towards container discharge station 3, interlayer removal element 8 translates towards interlayer discharge station 4 (Figure 1B).

As thrust element 2 removes layers 6, 6a, 6b from unit load 5, unit load 5 is progressively emptied.

Eventually, after the penultimate layer 6 with respect to direction Z is removed from unit load 5, lowermost layer 6b becomes at the same time the new uppermost layer 6a of unit load 5.

In general, before thrust element 2 starts to thrust layer 6, 6a, 6b, control unit 45 controls grippers 22 on the basis of the information, so as to move them in the first or in the second configuration (Figure 7).

In case detecting means 50 detect that the interlayer placed beneath uppermost layer 6a is an intermediate interlayer 12, control unit 45 sets grippers 22 in the first configuration.

In this condition, both arms 24, 25 are in respective forward positions and grip both sides of intermediate interlayer 12 along direction Z (Figure 4).

In further detail, when grippers 22 are set in the first configuration starting from the third configuration, both actuators 34, 35 move from respective contracted positions (Figure 3) towards respective extended positions (Figure 4).

As a consequence, rods 38, 39 telescopically slide with respect to respective cylinders 36, 37 parallel to axis A and knobs 40, 41 move from the respective closest positions to the respective furthest positions from respective cylinders 36, 37.

Since arm 24 is hinged at its rear portion 28 on knob 40 about axis D and arm 25 is hinged at its rear portion 28 on knob 41 about axis E, arms 24, 25 translate with respect to frame 23 integrally with respective rods 38, 39, move away from frame 23 (Figure 4) and rotate with respect to axes D, E.

At the same time, cranks 32, 33 rotate about respective axes B, C in respective anticlockwise and clockwise directions, with reference to Figures 3 and 4.

As a consequence, gripping stretches 26 of respective arms 24, 25 are set at the respective maximum distances from frame 23.

While thrust element 2 thrusts layer 6, 6a, 6b, grippers 22 in the first configuration grip intermediate interlayer 12, thus avoiding intermediate interlayer 12 to be undesirably moved with respect to pallet 7 and avoiding interference between intermediate interlayer 12 and thrust element 2.

After thrust element 2 has thrusted layer 6, 6a, 6b, control unit 45 sets grippers 22 in the third configuration, controls interlayer removal element 8 to remove intermediate interlayer 12 from unit load 5 and controls support platform 9 to upwardly translate parallel to direction Z (Figure 7).

In case detecting means 50 detect that the interlayer placed beneath the current uppermost layer 6a is a base interlayer 11, control unit 45 sets grippers 22 in the second configuration.

In this condition, arm 24 is in the respective forward position and grips one side of base interlayer 11 and arm 25 is in the respective retracted position (Figure 5).

In detail, when grippers 22 are set in the second configuration starting from the third configuration, actuator 34 moves from the contracted position (Figure 3) towards the extended position (Figure 5) and actuator 35 remains in the contracted position.

As a consequence, rod 38 telescopically slides with respect to cylinder 36 parallel to axis A and knob 40 moves from the closest position to the furthest position from cylinder 36.

Since arm 24 is hinged at rear portion 28 on knob 40 about axis D, it translates with respect to frame 23 integrally with rod 38, moves away from frame 23 (Figure 5) and rotates with respect to axis D.

At the same time, crank 32 rotates about axis B in anticlockwise direction, with reference to Figures 3 and 5.

As a consequence, gripping stretch 26 of arm 24 is set at the respective maximum distance from frame 23.

While thrust element 2 thrusts layer 6, 6a, 6b, grippers 22 in the second configuration grip base interlayer 11 and exert a force F on pallet 7, thus avoiding base interlayer 11 to be undesirably moved with respect to pallet 7 and avoiding interference between base interlayer 11 and thrust element 2.

After thrust element 2 has thrusted layer 6, 6a, 6b, control unit 45 sets grippers 22 in the third configuration and controls interlayer removal element 8 to remove base interlayer 11.

The advantages of gripper 22 according to the present invention will be clear from the above description.

In particular, since arms 24, 25 are movable independently of each other, only one kind of gripper 22 is necessary to grip both base and intermediate interlayers 11, 12.

In fact, since arms 24, 25 are settable in the respective retracted or forward positions independently of each other, grippers 22 can be set in the first configuration, in which they are adapted to grip intermediate interlayer 12, or in the second configuration, in which they are adapted to grip base interlayer 11.

As a consequence, the number of different components of depalletization machine 1 is reduced, compared to the known depalletization machines discussed in the introductory part of the present description, with a considerable reduction of warehouse and installation costs.

In detail, the mounting operations, the maintenance operations and the allocation of replacement parts of grippers 22 are considerably simplified.

The applicant has found that a depalletization machine 1 with three grippers 22 is particularly advantageous as compared with the known depalletization machines, comprising three grippers of the first kind and two grippers of the second kind.

In addition, since grippers 22 are interchangeable, they can be positioned indiscriminately along direction Y.

Finally, it is apparent that modifications and variants not departing from the scope of protection of the claims may be made to the gripper according to the present invention.

In particular, machine 1 may comprise only one or two grippers 22.

Grippers 22 could be translatable along direction Z, so as to be placed at a variable position with respect to guides 14.

In addition, only two grippers 22 could be set in the second configuration so as to grip one side of base interlayer 11.

Unit load 5 might not comprise top interlayer 13.

Furthermore, the retracted positions of arms 24, 25 may correspond to respective first distances between homologous points of arms 24, 25 and frame 23, instead of to respective minimum distances.

In detail, the first distances are greater than the respective minimum distances between homologous points of arms 24, 25 and frame 23.

Similarly, the forward positions of arms 24, 25 may correspond to respective second distances between homologous points of arms 24, 25 and frame 23, instead of to respective maximum distances.

The second distances are smaller than the respective maximum distances between homologous points of arms 24, 25 and frame 23.

In further detail, the second distances are greater than the respective first distances.

Furthermore, actuators 34, 35 may be in the respective contracted positions, when they have respective first lengths parallel to axis A, which are greater than the respective minimum lengths and in the respective extended positions, when they have respective second lengths parallel to axis A, which are smaller than the respective maximum lengths.

In detail, the second lengths are greater than the respective first lengths.

In addition, when arms 24, 25 are set in the respective retracted positions and homologous points of arms 24, 25 and frame 23 are set at the respective first distances, actuators 34, 35 are set in the respective contracted positions and have respective first lengths parallel to axis A.

When arms 24, 25 are set in the respective forward positions and homologous points of arms 24, 25 and frame 23 are set at the respective second distances, actuators 34, 35 are set in the respective extended positions and have respective second lengths parallel to axis A.

## Claims

1. A gripper (22) for a depalletization machine (1) and adapted to grip an interlayer sheet (11, 12, 13) of a unit load (5) to be disassembled, comprising:
- a frame (23); and
- a first and a second arm (24, 25), which are movable with respect to said frame (23);
said first and second arms (24, 25) being movable between respective retracted and forward positions with respect to said frame (23);
said retracted positions of said first and second arms (24, 25) corresponding to respective first distances between homologous points of respective arms (24, 25) and said frame (23); said forward positions of said first and second arms (24, 25) corresponding to respective second distances between homologous points of said first and second arms (24, 25) and said frame (23); said second distances being greater than respective said first distances;
**characterized in that** said first and second arms (24, 25) are movable independently of each other and said gripper (22) is settable at least in:
- a first configuration, in which said first and second arms (24, 25) are in respective said forward positions and are adapted to grip respective sides of said interlayer sheet (11, 12, 13); and
- a second configuration, in which only one (24) between said first and second arms (24, 25) is in said respective forward position and is adapted to grip one side of said interlayer sheet (11, 12, 13), and
by further comprising a first and a second independently controllable actuators (34, 35), which are related to said first and second arms (24, 25) respectively, and are selectively settable in respective contracted positions or extended positions;
said first and second actuators (34, 35) being in respective said contracted positions, when they have, in use, respective first lengths parallel to a first axis (A) of said gripper (22);
said first and second actuators (34, 35) being in respective said extended positions, when they have, in use, respective second lengths parallel to said first axis (A);
said second lengths being greater than respective said first lengths;
said first arm (24) being in said respective retracted position when said first actuator (34) is in said respective contracted position; said first arm (24) being in said respective forward position when said first actuator (34) is in said respective extended position;
said second arm (25) being in said respective retracted position when said second actuator (35) is in said respective contracted position; said second arm (25) being in said respective forward position when said second actuator (35) is in said respective extended position, and
**in that** said first and second actuators (34, 35) comprise:
- respective first and second cylinders (36, 37), which are stationary with respect to said frame (23); and
- respective first and second rods (38, 39), which are telescopically slidable with respect to respective first and second cylinders (36, 37);
said first and second cylinders (36, 37), and said first and second rods (38, 39) being directed parallel to said first axis (A);
said first and second rods (38, 39) having respective first and second opposite ends (38a, 39a; 38b, 39b); said first ends (38a, 39a) being positioned inside respective said first and second cylinders (36, 37) and said second ends (38b, 39b) being positioned outside respective said first and second cylinders (36, 37);
said first arm (24) being hinged to said first rod (38) and said second arm (25) being hinged to said second rod (39) at said respective second ends (38b, 39b) of said first and second rods (38, 39), and
**in that** each said first and second arm (24, 25) comprises a respective rear portion (28), which is connected to respective said first, second actuator (34, 35) and a respective front free portion (27), which is opposite to said rear portion (28) along said first axis (A);
each said first and second arm (24, 25) further comprising, proceeding from said front free portion (27) to said rear portion (28):
- a respective first stretch (29), which moves away from said first axis (A) along a first direction (Z), which is transversal to said first axis (A);
- a respective second stretch (30), which is substantially parallel to said first axis (A) when said first and second arms (24, 25) are, in use, in respective said forward positions; and
- a respective third stretch (31), which moves close to said first axis (A) along said first direction (Z);
each said first and second arm (24, 25) further comprising a gripping stretch (26), at respective said front free portions (27), which is configured to grip one said interlayer (11, 12, 13), and
**in that** said first and second actuators (34, 35) are linear actuators;
each said first and second rods (38, 39) comprising respective first and second driving knobs (40, 41) at respective second ends (38b, 39b), which are movable integrally with respective first and second rods (38, 39);
said first arm (24) being hinged at its said rear portion (28) to said first knob (40) about a second axis (D) and said second arm (25) being hinged at its rear portion (28) to said second knob (41) about a third axis (E);
said second and third axes (D, E) being parallel to each other and transversal to said first axis (A);
said first arm (24) being rotatable with respect to said first rod (38) about said second axis (D) and translatable with respect to said frame (23) independently of said second arm (25);
said second arm (25) being rotatable with respect to said second rod (39) about said third axis (E) and translatable with respect to said frame (23) independently of said first arm (24).

2. The gripper of claim 1, **characterized in that** said gripper (22) is further settable in a third configuration, in which said first and second arms (24, 25) are both in respective said retracted positions.

3. The gripper of any one of the foregoing claims, **characterized by** further comprising a first and a second cranks (32, 33), having respective third ends (32a, 33a) and respective fourth ends (32b, 33b), which are opposite to respective third ends (32a, 33a);
said third ends (32a, 33a) of respective first and second cranks (32, 33) being hinged to said frame (23) about respective fourth, fifth axes (B, C);
said fourth ends (32b, 33b) of respective said first and second cranks (32, 33) being hinged to respective first and second arms (24, 25).

4. The gripper of any one of the foregoing claims, **characterized in that** said retracted positions of said first and second arms (24, 25) correspond to respective minimum distances between homologous points of respective arms (24, 25) and said frame (23); said forward positions of said first and second arms (24, 25) corresponding to respective maximum distances between homologous points of said first and second arms (24, 25) and said frame (23).

5. A depalletization machine (1) for disassembling unit loads (5); each said unit load (5) comprising:
- a pallet (7); and
- a plurality of layers (6, 6a, 6b) stacked on one another on said pallet (7) along a first direction (Z); each said layer (6, 6a, 6b) comprising a plurality of containers or boxes of containers (10); said plurality of layers (6, 6a, 6b) comprising an uppermost layer (6a) and a lowermost layer (6b), which is the closest layer to said pallet (7);
- a base interlayer (11), which is placed, in use, between said pallet (7) and said lowermost layer (6b) of said unit load (5) along said first direction (Z); and
- at least one intermediate interlayer (12), which is placed, in use, between two said layers (6, 6a, 6b) of said unit load (5) consecutively stacked on each other along said first direction (Z);
said depalletization machine (1) comprising a thrust element (2), which is controllable to thrust said containers (10) forming one layer (6, 6a, 6b), so as to remove said layer (6, 6a, 6b) from said unit load (5);
**characterized by** comprising :
- at least one gripper (22) according to any one of the foregoing claims;
- a control unit (45) configured to control at least said thrust element (2) and said at least one gripper (22); and
- detecting means (50), which are configured to detect an information on whether the interlayer (11, 12, 13) placed beneath said uppermost layer (6a) is a base interlayer (11) or an intermediate interlayer (12) and to send said information to said control unit (45).

6. The depalletization machine of claim 5, **characterized by** comprising two or more said grippers (22), which are aligned parallel to a second direction (Y) and are located, in use, at the same height along said first direction (Z);
said second direction (Y) being transversal to said first direction (Z).

## Patentansprüche

1. Greifer (22) für eine Depalettiermaschine (1), der dazu ausgeführt ist, einen Trennlagenbogen (11, 12, 13) einer zu zerlegenden Ladeeinheit (5) zu ergreifen, umfassend:
- einen Rahmen (23) und
- einen ersten und einen zweiten Arm (24, 25), die in Bezug auf den Rahmen (23) beweglich sind,
wobei der erste und der zweite Arm (24, 25) zwischen jeweiligen zurückgezogenen und vorderen Positionen in Bezug auf den Rahmen (23) beweglich sind,
wobei die zurückgezogenen Positionen des ersten und des zweiten Arms (24, 25) jeweiligen ersten Abständen zwischen entsprechenden Punkten jeweiliger Arme (24, 25) und des Rahmens (23) entsprechen, wobei die vorderen Positionen des ersten und des zweiten Arms (24, 25) jeweiligen zweiten Abständen zwischen entsprechenden Punkten des ersten und des zweiten Arms (24, 25) und des Rahmens (23) entsprechen, wobei die zweiten Abstände größer als jeweilige erste Abstände sind,
**dadurch gekennzeichnet, dass** der erste und der zweite Arm (24, 25) unabhängig voneinander beweglich sind und der Greifer (22) mindestens in Folgenden einstellbar ist:
- einer ersten Konfiguration, in der sich der erste und der zweite Arm (24, 25) in der jeweiligen vorderen Position befinden und dazu ausgeführt sind, jeweilige Seiten des Trennlagenbogens (11, 12, 13) zu ergreifen, und
- einer zweiten Konfiguration, in der sich nur einer (24) des ersten und des zweiten Arms (24, 25) in der jeweiligen vorderen Position befindet und dazu ausgeführt ist, eine Seite des Trennlagenbogens (11, 12, 13) zu ergreifen, und
dadurch, dass er ferner einen ersten und einen zweiten unabhängig steuerbaren Aktuator (34, 35) umfasst, die mit dem ersten bzw. dem zweiten Arm (24, 25) in Beziehung stehen und gezielt in jeweilige zusammengezogene Positionen oder ausgefahrene Positionen einstellbar sind,
wobei sich der erste und der zweite Aktuator (34, 35) in jeweiligen zusammengezogenen Positionen befinden, wenn sie im Gebrauch jeweilige erste Längen parallel zu einer ersten Achse (A) des Greifers (22) aufweisen,
wobei sich der erste und der zweite Aktuator (34, 35) in jeweiligen ausgefahrenen Positionen befinden, wenn sie im Gebrauch jeweilige zweite Längen parallel zu der ersten Achse (A) aufweisen,
wobei die zweiten Längen größer als jeweilige erste Längen sind,
wobei sich der erste Arm (24) in der jeweiligen zurückgezogenen Position befindet, wenn sich der erste Aktuator (34) in der jeweiligen zusammengezogenen Position befindet, wobei sich der erste Arm (24) in der jeweiligen vorderen Position befindet, wenn sich der erste Aktuator (34) in der jeweiligen ausgefahrenen Position befindet,
wobei sich der zweite Arm (25) in der jeweiligen zurückgezogenen Position befindet, wenn sich der zweite Aktuator (35) in der jeweiligen zusammengezogenen Position befindet, wobei sich der zweite Arm (25) in der jeweiligen vorderen Position befindet, wenn sich der zweite Aktuator (35) in der jeweiligen ausgefahrenen Position befindet, und
dadurch, dass der erste und der zweite Aktuator (34, 35) Folgendes umfassen:
- einen jeweiligen ersten und zweiten Zylinder (36, 37), die bezüglich des Rahmens (23) feststehend sind, und
- eine jeweilige erste und zweite Stange (38, 39), die bezüglich des jeweiligen ersten und zweiten Zylinders (36, 37) teleskopartig verschiebbar sind,
wobei der erste und der zweite Zylinder (36, 37) und die erste und die zweite Stange (38, 39) parallel zu der ersten Achse (A) gerichtet sind,
wobei die erste und die zweite Stange (38, 39) jeweils ein erstes und ein zweites gegenüberliegendes Ende (38a, 39a; 38b, 39b) aufweisen, wobei die ersten Enden (38a, 39a) in dem jeweiligen ersten und zweiten Zylinder (36, 37) positioniert sind und die zweiten Enden (38b, 39b) außerhalb des jeweiligen ersten und zweiten Zylinders (36, 37) positioniert sind,
wobei der erste Arm (24) scharniermäßig an der ersten Stange (38) angelenkt ist und der zweite Arm (25) scharniermäßig an der zweiten Stange (39) angelenkt ist, und zwar an den jeweiligen zweiten Enden (38b, 39b) der ersten und zweiten Stange (38, 39) und
dass der erste und der zweite Arm (24, 25) jeweils einen jeweiligen hinteren Abschnitt (28), der mit dem jeweiligen ersten, zweiten Aktuator (34, 35) verbunden ist, und einen jeweiligen vorderen freien Abschnitt (27), der dem hinteren Abschnitt (28) entlang der ersten Achse (A) gegenüberliegt, umfasst,
wobei der erste und der zweite Arm (24, 25) jeweils ferner, ausgehend von dem vorderen freien Abschnitt (27) zu dem hinteren Abschnitt (28), Folgendes umfasst:
- einen jeweiligen ersten Abschnitt (29), der sich von der ersten Achse (A) entlang einer ersten Richtung (Z), die quer zu der ersten Achse (A) verläuft, weg erstreckt,
- einen jeweiligen zweiten Abschnitt (30), der im Wesentlichen parallel zu der ersten Achse (A) verläuft, wenn sich der erste und der zweite Arm (24, 25) im Gebrauch in den jeweiligen vorderen Positionen befinden, und
- einen jeweiligen dritten Abschnitt (31), der sich nahe der ersten Achse (A) entlang der ersten Richtung (Z) erstreckt,
wobei der erste und der zweite Arm (24, 25) jeweils ferner einen Greifabschnitt (26) an den jeweiligen vorderen freien Abschnitten (27) umfassen, der zum Greifen einer Trennlage (11, 12, 13) ausgestaltet ist, und
dass der erste und der zweite Aktuator (34, 35) Linearaktuatoren sind,
wobei die erste und die zweite Stange (38, 39) jeweils einen jeweiligen ersten und zweiten Antriebsknopf (40, 41) an jeweiligen zweiten Enden (38b, 39b) umfassen, die integral mit jeweiligen ersten und zweiten Stangen (38, 39) beweglich sind,
wobei der erste Arm (24) scharniermäßig an seinem hinteren Abschnitt (28) um eine zweite Achse (D) an dem ersten Knopf (40) angelenkt ist und der zweite Arm (25) scharniermäßig an seinem hinteren Abschnitt (28) um eine dritte Achse (E) an dem zweiten Knopf (41) angelenkt ist, wobei die zweite und dritte Achse (D, E) parallel zueinander und quer zu der ersten Achse (A) verlaufen, wobei der erste Arm (24) in Bezug auf die erste Stange (38) um die zweite Achse (D) drehbar und in Bezug auf den Rahmen (23) unabhängig von dem zweiten Arm (25) translatierbar ist,
wobei der zweite Arm (25) in Bezug auf die zweite Stange (39) um die dritte Achse (E) drehbar und in Bezug auf den Rahmen (23) unabhängig von dem ersten Arm (24) translatierbar ist.

2. Greifer nach Anspruch 1, **dadurch gekennzeichnet, dass** der Greifer (22) ferner in eine dritte Konfiguration einstellbar ist, in der sich sowohl der erste als auch der zweite Arm (24, 25) in der jeweiligen zurückgezogenen Position befinden.

3. Greifer nach einem der vorhergehenden Ansprüche, **dadurch gekennzeichnet, dass** er ferner eine erste und eine zweite Kurbel (32, 33) umfasst, die jeweilige dritte Enden (32a, 33a) und jeweilige vierte Enden (32b, 33b) aufweisen, die jeweiligen dritten Enden (32a, 33a) gegenüberliegen,
wobei die dritten Enden (32a, 33a) der jeweiligen ersten und zweiten Kurbel (32, 33) um jeweilige vierte, fünfte Achsen (B, C) scharniermäßig an dem Rahmen (23) angelenkt sind,
wobei die vierten Enden (32b, 33b) der jeweiligen ersten und zweiten Kurbel (32, 33) scharniermäßig an dem jeweiligen ersten und zweiten Arm (24, 25) angelenkt sind.

4. Greifer nach einem der vorhergehenden Ansprüche, **dadurch gekennzeichnet, dass** die zurückgezogenen Positionen des ersten und des zweiten Arms (24, 25) jeweiligen minimalen Abständen zwischen entsprechenden Punkten der jeweiligen Arme (24, 25) und des Rahmens (23) entsprechen, wobei die vorderen Positionen des ersten und des zweiten Arms (24, 25) jeweiligen maximalen Abständen zwischen entsprechenden Punkten des ersten und des zweiten Arms (24, 25) und des Rahmens (23) entsprechen.

5. Depalettiermaschine (1) zum Zerlegen von Ladeeinheiten (5), wobei jede Ladeeinheit (5) Folgendes umfasst:
- eine Palette (7) und
- eine Vielzahl von Lagen (6, 6a, 6b), die entlang einer ersten Richtung (Z) auf der Palette (7) aufeinander gestapelt sind, wobei jede Lage (6, 6a, 6b) eine Vielzahl von Behältern oder Kästen von Behältern (10) umfasst, wobei die Vielzahl von Lagen (6, 6a, 6b) eine oberste Lage (6a) und eine unterste Lage (6b), die der Palette (7) am nächsten liegt, umfassen,
- eine Basistrennlage (11), die im Gebrauch zwischen der Palette (7) und der untersten Lage (6b) der Ladeeinheit (5) entlang der ersten Richtung (Z) platziert ist, und
- mindestens eine Zwischentrennlage (12), die im Gebrauch zwischen zwei Lagen (6, 6a, 6b) der Ladeeinheit (5), die entlang der ersten Richtung (Z) aufeinanderfolgend aufeinander gestapelt sind, platziert ist,
wobei die Depalettiermaschine (1) ein Schubelement (2) umfasst, das dahingehend steuerbar ist, die eine Lage (6, 6a, 6b) bildenden Behälter (10) zu schieben, um die Lage (6, 6a, 6b) von der Ladeeinheit (5) zu entfernen, **dadurch gekennzeichnet, dass** sie Folgendes umfasst:
- mindestens einen Greifer (22) nach einem der vorhergehenden Ansprüche,
- eine Steuereinheit (45), die zum Steuern mindestens des Schubelements (2) und des mindestens einen Greifers (22) ausgestaltet ist, und
- Detektionsmittel (50), die dazu ausgestaltet sind, Informationen darüber zu detektieren, ob die unter der obersten Lage (6a) platzierte Trennlage (11, 12, 13) eine Basistrennlage (11) oder eine Zwischentrennlage (12) ist, und die Informationen an die Steuereinheit (45) zu senden.

6. Depalettiermaschine nach Anspruch 5, **dadurch gekennzeichnet, dass** sie zwei oder mehr Greifer (22) umfasst, die parallel zu einer zweiten Richtung (Y) ausgerichtet sind und sich im Gebrauch auf derselben Höhe entlang der ersten Richtung (Z) befinden,
wobei die zweite Richtung (Y) quer zu der ersten Richtung (Z) verläuft.

## Revendications

1. Dispositif de préhension (22) pour une machine de dépalettisation (1), apte à saisir une plaque intercalaire (11, 12, 13) d'une charge unitaire (5) à défaire, comprenant :
- un support (23) ; et
- des premier et second bras (24, 25) mobiles par rapport audit support (23) ;
lesdits premier et second bras (24, 25) étant mobiles entre des positions respectives rétractée et avancée par rapport audit support (23) ;
lesdites positions rétractées desdits premier et second bras (24, 25) correspondant à des premières distances respectives entre des points homologues des bras respectifs (24, 25) et ledit support (23) ; lesdites positions avancées desdits premier et second bras (24, 25) correspondant à des secondes distances respectives entre des points homologues desdits premier et second bras (24, 25) et ledit support (23) ; lesdites secondes distances étant supérieures auxdites premières distances respectives ;
**caractérisé en ce que** lesdits premier et second bras (24, 25) sont déplaçables indépendamment l'un de l'autre et ledit dispositif de préhension (22) peut être mis au moins dans :
- une première configuration, dans laquelle lesdits premier et second bras (24, 25) sont dans lesdites positions avancées respectives et sont aptes à saisir des côtés respectifs de ladite plaque intercalaire (11, 12, 13) ; et
- une deuxième configuration, dans laquelle un seul (24) desdits premier et second bras (24, 25) est dans ladite position avancée respective et est apte à saisir un côté de ladite plaque intercalaire (11, 12, 13), et **en ce qu'**il comprend, en outre, des premier et second actionneurs (34, 35) pouvant être commandés indépendamment, qui sont respectivement reliés auxdits premier et second bras (24, 25), et qui peuvent être mis sélectivement dans des positions contractées ou étendues respectives ;
lesdits premier et second actionneurs (34, 35) étant dans lesdites positions contractées respectives lorsqu'ils présentent, durant l'utilisation, des premières longueurs respectives parallèles à un premier axe (A) dudit dispositif de préhension (22) ;
lesdits premier et second actionneurs (34, 35) étant dans lesdites positions étendues respectives lorsqu'ils présentent, durant l'utilisation, des secondes longueurs respectives parallèles audit premier axe (A) ;
lesdites secondes longueurs étant supérieures auxdites premières longueurs respectives ;
ledit premier bras (24) étant dans ladite position rétractée respective lorsque ledit premier actionneur (34) est dans ladite position contractée respective ;
ledit premier bras (24) étant dans ladite position avancée respective lorsque ledit premier actionneur (34) est dans ladite position étendue respective ;
ledit second bras (25) étant dans ladite position rétractée respective lorsque ledit second actionneur (35) est dans ladite position contractée respective ; ledit second bras (25) étant dans ladite position avancée respective lorsque ledit second actionneur (35) est dans ladite position étendue respective, et
**en ce que** lesdits premier et second actionneurs (34, 35) comprennent :
- des premier et second cylindres (36, 37) respectifs, fixes par rapport audit support (23) ; et
- des première et seconde tiges (38, 39) respectives, coulissantes de manière télescopique par rapport aux premier et second cylindres (36, 37) respectifs,
lesdits premier et second cylindres (36, 37), et lesdites première et seconde tiges (38, 39) étant orientés parallèlement audit premier axe (A) ;
lesdites première et seconde tiges (38, 39) ayant des première et deuxième extrémités opposées (38a, 39a ; 38b, 39b) respectives ; lesdites premières extrémités (38a, 39a) étant positionnées à l'intérieur desdits premier et second cylindres (36, 37) respectifs et lesdites deuxièmes extrémités (38b, 39b) étant positionnées à l'extérieur desdits premier et second cylindres (36, 37) respectifs ;
ledit premier bras (24) étant articulé sur ladite première tige (38) et ledit second bras (25) étant articulé sur ladite seconde tige (39) au niveau desdites deuxièmes extrémités (38b, 39b) respectives desdites première et seconde tiges (38, 39), et
**en ce que** chacun desdits premier et second bras (24, 25) comprend une partie arrière (28) respective, qui est reliée auxdits premier et second actionneurs (34, 35) respectifs, et une partie avant libre (27) respective, opposée à ladite partie arrière (28) le long dudit premier axe (A) ;
chacun desdits premier et second bras (24, 25) comprenant, en outre, en allant de ladite partie avant libre (27) à ladite partie arrière (28) :
- un premier segment (29) respectif, qui s'écarte dudit premier axe (A) le long d'une première direction (Z), qui est transversale audit premier axe (A) ;
- un deuxième segment (30) respectif, qui est sensiblement parallèle audit premier axe (A) lorsque lesdits premier et second bras (24, 25) sont, durant l'utilisation, dans lesdites positions avancées respectives ; et
- un troisième segment (31) respectif, qui se rapproche dudit premier axe (A) le long de ladite première direction (Z) ;
chacun desdits premier et second bras (24, 25) comprenant, en outre, au niveau desdites parties avant libres (27) respectives, un segment de préhension (26) qui est conçu pour saisir une plaque intercalaire (11, 12, 13) susmentionnée, et
**en ce que** lesdits premier et second actionneurs (34, 35) sont des actionneurs linéaires ;
chacune desdites première et seconde tiges (38, 39) comprenant des premier et second embouts d'entraînement (40, 41) respectifs au niveau des deuxièmes extrémités (38b, 39b) respectives, qui sont mobiles solidairement avec les première et seconde tiges (38, 39) respectives ;
ledit premier bras (24) étant articulé au niveau de sa partie arrière (28) susmentionnée sur ledit premier embout (40) autour d'un deuxième axe (D) et ledit second bras (25) étant articulé au niveau de sa partie arrière (28) sur ledit second embout (41) autour d'un troisième axe (E) ;
lesdits deuxième et troisième axes (D, E) étant parallèles entre eux et transversaux audit premier axe (A) ;
ledit premier bras (24) étant mobile en rotation par rapport à ladite première tige (38) autour dudit deuxième axe (D) et mobile en translation par rapport audit support (23) indépendamment dudit second bras (25) ; ledit second bras (25) étant mobile en rotation par rapport à ladite seconde tige (39) autour dudit troisième axe (E) et mobile en translation par rapport audit support (23) indépendamment dudit premier bras (24).

2. Dispositif de préhension selon la revendication 1, **caractérisé en ce que** ledit dispositif de préhension (22) peut, en outre, être mis dans une troisième configuration, dans laquelle lesdits premier et second bras (24, 25) sont tous deux dans lesdites positions rétractées respectives.

3. Dispositif de préhension selon l'une quelconque des revendications précédentes, **caractérisé en ce qu'**il comprend, en outre, des première et seconde bielles (32, 33), ayant des troisièmes extrémités (32a, 33a) respectives et des quatrièmes extrémités (32b, 33b) respectives, qui sont opposées aux troisièmes extrémités (32a, 33a) respectives ;
lesdites troisièmes extrémités (32a, 33a) des première et seconde bielles (32, 33) respectives étant articulées sur ledit support (23) autour de quatrième et cinquième axes (B, C) respectifs ;
lesdites quatrièmes extrémités (32b, 33b) desdites première et seconde bielles (32, 33) respectives étant articulées sur lesdits premier et second bras (24, 25) respectifs.

4. Dispositif de préhension selon l'une quelconque des revendications précédentes, **caractérisé en ce que** lesdites positions rétractées desdits premier et second bras (24, 25) correspondent à des distances minimales respectives entre des points homologues des bras (24, 25) respectifs et ledit support (23) ; lesdites positions avancées desdits premier et second bras (24, 25) correspondent à des distances maximales respectives entre des points homologues desdits premier et second bras (24, 25) et ledit support (23).

5. Machine de dépalettisation (1) servant à défaire des charges unitaires (5) ; chacune desdites charges unitaires (5) comprenant :
- une palette (7) ; et
- une pluralité de couches (6, 6a, 6b) empilées les unes sur les autres sur ladite palette (7) le long d'une première direction (Z) ; chacune desdites couches (6, 6a, 6b) comprenant une pluralité de récipients ou boîtes de récipients (10) ; ladite pluralité de couches (6, 6a, 6b) comprenant une couche extrême supérieure (6a) et une couche extrême inférieure (6b), qui est la couche la plus proche de ladite palette (7) ;
- un intercalaire de base (11), qui est placé, durant l'utilisation, entre ladite palette (7) et ladite couche extrême inférieure (6b) de ladite charge unitaire (5) le long de ladite première direction (Z) ; et
- au moins un intercalaire intermédiaire (12), qui est placé, durant l'utilisation, entre deux desdites couches (6, 6a, 6b) de ladite charge unitaire (5) empilées consécutivement l'une sur l'autre le long de ladite première direction (Z) ;
ladite machine de dépalettisation (1) comprenant un élément pousseur (2) propre à être commandé pour pousser lesdits récipients (10) formant une couche (6, 6a, 6b) de manière à retirer ladite couche (6, 6a, 6b) de ladite charge unitaire (5) ;
**caractérisée en ce qu'**elle comprend :
- au moins un dispositif de préhension (22) selon l'une quelconque des revendications précédentes ;
- une unité de commande (45) conçue pour commander au moins ledit élément pousseur (2) et ledit au moins un dispositif de préhension (22) ; et
- des moyens de détection (50), conçus pour détecter une information indiquant si l'intercalaire (11, 12, 13) placé sous ladite couche extrême supérieure (6a) est un intercalaire de base (11) ou un intercalaire intermédiaire (12) et pour envoyer ladite information à ladite unité de commande (45).

6. Machine de dépalettisation selon la revendication 5, **caractérisée en ce qu'**elle comprend au moins deux desdits dispositifs de préhension (22), qui sont alignés parallèlement à une deuxième direction (Y) et sont situés, durant l'utilisation, à la même hauteur le long de ladite première direction (Z) ;
ladite deuxième direction (Y) étant transversale à ladite première direction (Z).
